# FASCICULE DE BREVET EUROPEEN

(11) **EP 2 628 221 B1**
(45) Date de publication et mention de la délivrance du brevet: **05.11.2014**
(21) Numéro de dépôt: 11767699.9
(22) Date de dépôt: 11.10.2011
(51) Int. Cl.: H02B 13/075, H02G 5/06

(54) **DISPOSITIF SECTIONNEUR DE TERRE ET POSTE ELECTRIQUE HAUTE TENSION COMPRENANT UN TEL DISPOSITIF**
ERDUNGSSCHALTERVORRICHTUNG UND HOCHSPANNUNGSSCHALTANLAGE MIT EINER SOLCHEN VORRICHTUNG
EARTHING SWITCH DISCONNECTOR AND HIGH-VOLTAGE ELECTRICAL SIGNAL BOX COMPRISING SUCH A DEVICE

(30) Priorité: 14.10.2010 FR 1058383
(43) Date de publication de la demande: 21.08.2013
(73) Titulaire: Alstom Technology Ltd., 5400 Baden (CH)
(72) Inventeur: BLANCHET, Guilhem, F-82000 Montauban (FR)
(74) Mandataire: Ilgart, Jean-Christophe
(86) Numéro de dépôt international: PCT/EP2011/067672
(87) Numéro de publication internationale: WO 2012/049136

(56) Documents cités:
- WO-A1-01/22547
- US-A- 4 255 632

## Description

### DOMAINE TECHNIQUE

L'invention concerne un dispositif sectionneur de terre et un poste électrique haute tension comprenant un tel dispositif.

### ÉTAT DE LA TECHNIQUE ANTÉRIEURE

Les postes électriques haute tension sont composés de multiples appareils électriques qui ont des fonctions fondamentales différentes les unes des autres. L'ensemble de ces appareils permet de réaliser la fonction globale suivante : distribuer l'énergie sur les réseaux électriques haute tension tout en protégeant ces réseaux.

Les appareils électriques d'interruption à haute tension concernent les réseaux alimentés soit en courant alternatif sous des tensions supérieures à 1000 volts, soit en courant continu sous des tensions supérieures à 1500 volts. Une parfaite maîtrise de l'énergie électrique nécessite de posséder les moyens nécessaires à la commande et au contrôle de la circulation du courant dans les circuits qui vont des centrales de production jusqu'aux consommateurs. Une telle mission incombe fondamentalement à ces appareils électriques dont le rôle est d'assurer en priorité la protection automatique des circuits contre tous les incidents susceptibles d'en perturber le fonctionnement, mais aussi d'effectuer sur commande les différentes opérations qui permettent de modifier la configuration du réseau dans les conditions normales de service. Par ces fonctions complémentaires de commande volontaire et de sécurité automatique, les appareils électriques contribuent à la qualité de la disponibilité du réseau électrique et à sa sureté d'emploi. La qualité principale de ces appareils électriques est d'être disponibles à tout moment et d'intervenir sans défaillance, au point de faire oublier qu'ils existent. On exige de ces appareils une fiabilité presque parfaite, des opérations de maintenance légères et en nombre limité dans la mesure où ces interventions sont à la fois coûteuses et gênantes pour l'exploitation. De nombreuses solutions techniques ont été conçues pour développer des appareils électriques toujours plus performants et plus fiables.

Les sectionneurs de mise à la terre sont des appareils de sécurité, qui ont pour but d'établir une connexion via un matériel conducteur rigide entre les parties sous tension, fixées a un potentiel pas ou peu connu, et la terre. Dans le cas des tensions UHV (« Ultra High Voltage ») on utilise des sectionneurs de mise à la terre rapides avec un pouvoir de soufflage sur l'ouverture de courant induit d'environ 60 à 80ms, nécessaire dans le cas où un deuxième défaut apparaîtrait sur la ligne aérienne UHV. Un tel sectionneur doit pouvoir établir et couper des courants induits très importants, dont les valeurs diffèrent en fonction du couplage entre des lignes aériennes UHV, et leurs différentes phases de façon très rapide entre ouverture et fermeture (environ 200ms et environ 1000ms). Les sectionneurs sont avant tout des organes de sécurité utilisés pour ouvrir ou fermer un circuit lorsqu'il n'est pas parcouru par un courant, et prévus pour isoler, par rapport au reste du réseau, un ensemble de circuits, par exemple un appareil, une machine, une section de ligne ou de câble, afin de permettre au personnel d'exploitation d'y accéder sans danger.

En principe les sectionneurs n'ont pas à interrompre de courants, cependant certains sectionneurs peuvent être amenés à couper des courants de transfert de barres (jusqu'à 1600 A sous 10 à 300 V). Les sectionneurs de terre doivent être capables de couper les courants induits qui peuvent circuler dans les circuits hors tension par couplage capacitif et inductif avec les circuits adjacents ou phases adjacentes sous tension jusqu'à 160 A sous 20 kV. Dans le cadre de l'application UHV, ces valeurs peuvent être plus importantes.

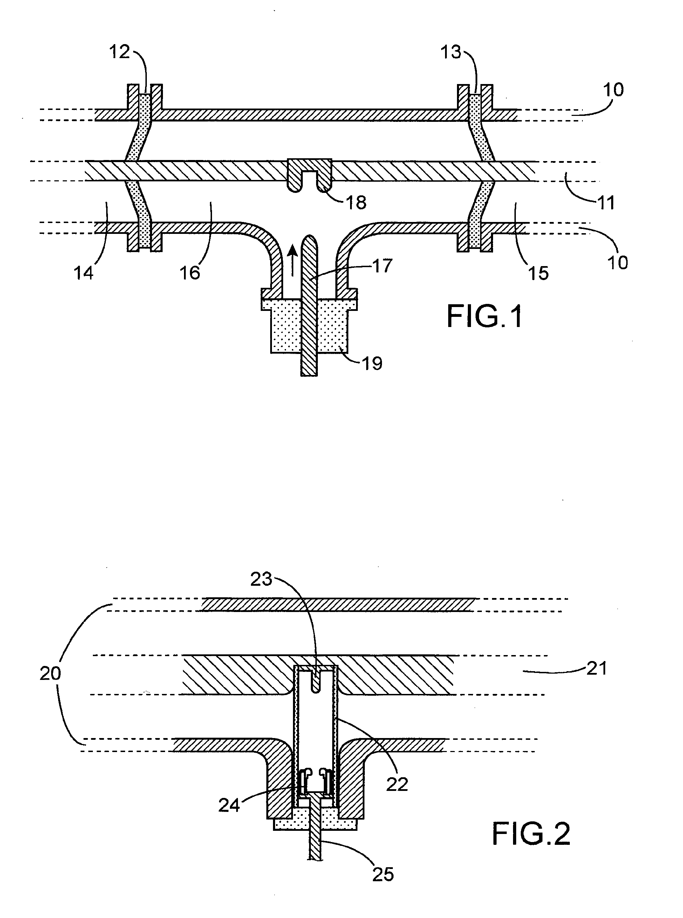

Le document référencé [1] en fin de description décrit un sectionneur de mise à la terre de type HSGS (*« High speed Grounding Switch »*) de l'art connu. Comme illustré sur la figure 1, un tel sectionneur comprend une enveloppe métallique cylindrique 10, mise à la terre et remplie d'un gaz isolant sous pression à haute rigidité diélectrique, tel que l'hexafluorure de soufre ou autre mélange gazeux. Cette enveloppe 10 est traversée, dans le sens longitudinal et de manière coaxiale, par un conducteur haute tension 11 portée par deux cônes ou supports isolants 12, 13 délimitant les compartiments adjacents 14, 15 d'un compartiment intermédiaire 16. Le sectionneur de mise à la terre, disposé dans le compartiment intermédiaire 16, comporte une broche 17 mobile en translation selon une direction perpendiculaire au conducteur 11 et coopérant en position de fermeture avec une électrode fixe 18 solidaire du conducteur 11. Cette broche 17 est connectée électriquement à la terre par un conducteur de liaison non représenté et est guidée durant sa course de translation par un guide 19 dotée d'une ouverture centrale étanche de passage de la broche.

Une telle solution est volumineuse et onéreuse. Elle nécessite de plus des moyens pour supporter le conducteur haute tension 11, constitués par les deux cônes supports isolants 12 et 13. Un tel sectionneur est complexe et s'apparente plus à un disjoncteur qu'à un sectionneur de terre. De plus, ce sectionneur est volumineux et gourmand en gaz. L'utilisation des deux cônes isolants pour supporter le conducteur est onéreuse. Enfin, un arc électrique vient éroder les parties métalliques de ce sectionneur lors de son ouverture et de sa fermeture. Il en résulte un déplacement de particules qui diminue la rigidité diélectrique de l'ensemble.

Le document WO 01/2257 décrit un sectionneur de terre avec un tube isolant.

L'invention a pour objet de résoudre de tels inconvénients en proposant un dispositif sectionneur de terre permettant de supporter le conducteur haute tension avec un tube isolant relié à ce conducteur et à l'enveloppe, en emprisonnant l'ensemble des particules générées par usure électrique et mécanique durant le fonctionnement de ce dispositif

### EXPOSÉ DE L'INVENTION

L'invention concerne un dispositif sectionneur de terre disposé à l'intérieur d'un poste haute tension à isolation gazeuse comprenant une enveloppe métallique mise à la terre et un conducteur haute tension disposé de façon coaxiale à l'intérieur de celle-ci, qui comprend un tube isolant disposé entre l'enveloppe et le conducteur perpendiculairement à ceux-ci, permettant de supporter le conducteur et de guider une partie mobile conductrice de mise à la terre de ce conducteur dans lequel la partie mobile comprend un contact mobile apte à coulisser à l'intérieur du tube isolant, caractérisé en ce qu'il comprend, en outre, des clapets d'entrée, des clapets de liaison à un volume A interne au tube isolant, disposé entre le contact mobile et la seconde extrémité du tube isolant, des clapets de liaison à un volume B interne au tube isolant, disposé entre le contact mobile et la première extrémité du tube isolant, et des joints glissants disposés entre la paroi extérieure du contact mobile et la paroi intérieure du tube isolant.

Avantageusement une tige de manoeuvre est reliée à ce contact mobile. Le contact mobile peut avoir une forme de tulipe à plusieurs doigts ou de tige métallique conductrice.

Avantageusement ce dispositif comprend en outre un contact fixe solidaire du conducteur haute tension apte à recevoir le contact mobile. Avantageusement un dispositif de canalisation de type buse est rajouté ou est partie intégrante du tube isolant.

L'invention concerne également un poste électrique haute tension comprenant au moins un tel dispositif sectionneur de terre.

Le sectionneur de terre de l'invention permet de supporter un conducteur haute tension via une seule pièce isolante, et d'utiliser cette même pièce isolante comme guide et chambre de compression et de détente pour souffler et diminuer les durées d'arc électrique. Une telle solution permet de limiter le nombre d'interfaces de connection (brides de liaisons) et donc de limiter les fuites. Elle permet d'obtenir une compacité réelle du sectionneur de terre, une diminution des temps d'arc et un pouvoir de soufflage important. Les particules et produits de décomposition, consécutifs à la présence d'un arc électrique lors de l'ouverture et de la fermeture de ce sectionneur sont piégés, ce qui permet de garantir une tenue diélectrique parfaite, ce qui n'était pas le cas du dispositif de l'art connu décrit ci-dessus.

Un tel sectionneur est utilisable pour une tension UHV supérieure à 420kV, par exemple 1100kV.

### BRÈVE DESCRIPTION DES DESSINS

La figure 1 illustre un dispositif sectionneur de terre de l'art connu.
La figure 2 illustre schématiquement le dispositif sectionneur de terre de l'invention.

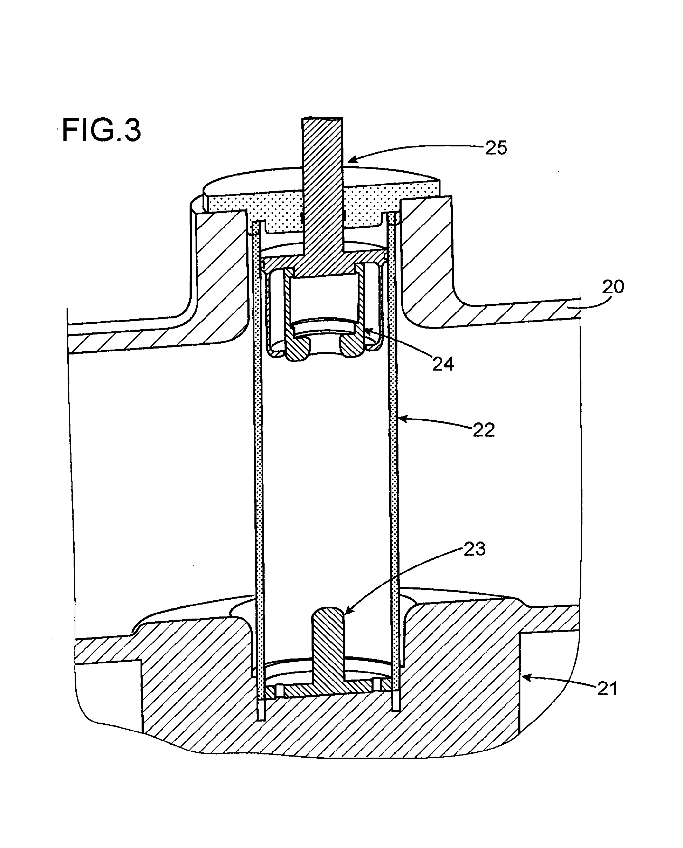

Les figures 3 à 5 illustrent le fonctionnement du dispositif sectionneur de terre de l'invention.

### EXPOSÉ DÉTAILLÉ DE MODES DE RÉALISATION PARTICULIERS

La figure 2 illustre le positionnement du sectionneur de terre de l'invention selon un petit piquage sur une ligne haute tension comprenant une enveloppe tubulaire métallique 20 reliée à la terre, et un conducteur haute tension 21 disposé de façon coaxiale selon un axe de symétrie à l'intérieur de cette enveloppe 20, sans nécessiter de couper cette enveloppe comme dans le dispositif de l'art connu illustré selon la figure 1.

Le sectionneur de terre de l'invention comprend un tube isolant 22 fixé, en une première extrémité, au conducteur haute tension 21 et, en une seconde extrémité, à l'enveloppe tubulaire 20, selon une direction perpendiculaire à leur axe de symétrie.

Il comprend :
- un contact fixe 23 solidaire du conducteur haute tension 21,
- un contact mobile 24 muni de joints glissants 26 à sa périphérie, pouvant se déplacer à l'intérieur du tube isolant 22, une tige de manoeuvre 25 étant reliée à ce contact mobile.

De manière connue d'un homme du métier, cette tige de manoeuvre 25 peut être par exemple actionnée par une commande à ressort associée à un moteur électrique ou par une commande hydraulique.

Le sectionneur de terre de l'invention peut comprendre également des clapets d'entrée 28, des clapets 29 de liaison à volume A 30 interne au tube isolant 22, disposé entre le contact mobile 24 et la seconde extrémité du tube isolant, des clapets 31 de liaison à un volume B 32 interne au tube isolant, disposé entre le contact mobile 24 et la première extrémité du tube isolant 22.

Le fonctionnement du sectionneur de terre de l'invention est le suivant.

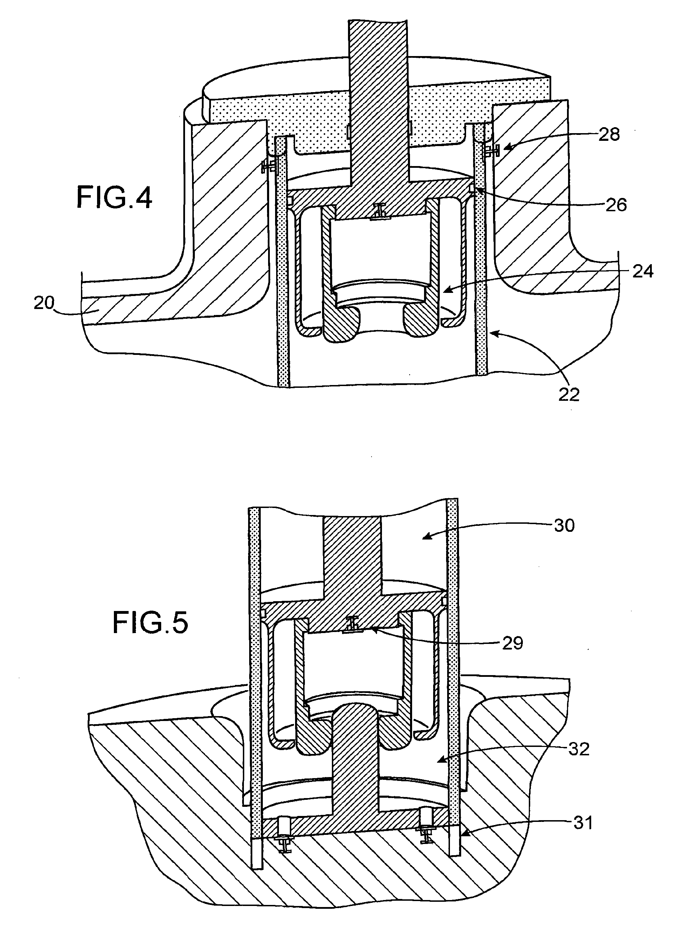

Lors de la manoeuvre de fermeture de celui-ci, c'est-à-dire de mise à la terre du conducteur haute tension 21, le contact mobile 24 guidé par la tige de manoeuvre 25 se déplace pour aller se connecter sur le contact fixe 23, comme illustré sur la figure 5. Le volume B 32 de compression monte en pression, à la suite d'un tel déplacement du contact mobile 24, l'étanchéité étant réalisée grâce aux joints glissants 26 disposés entre la paroi extérieure du contact mobile 24 et la paroi intérieure du tube isolant 22. Du fait de cette augmentation de pression locale, l'arc entre le contact fixe 23 et le contact mobile 24 apparaît plus tardivement, ce qui permet de réduire le phénomène d'érosion de ces deux contacts mobile et fixe 24 et 23. Lors de cette manoeuvre le volume A 30 subit une dépression et se remplit de gaz « neuf » et « froid ».

Lors de la manoeuvre d'ouverture de celui-ci, c'est-à-dire lors de la séparation du contact mobile 24 et du contact fixe 23 via le mouvement de la tige de manoeuvre 25, une dépression est créée dans le volume B. Ce volume B est rempli de gaz « neuf » et « froid » au travers des clapets 31. Dès que les contacts 23 et 24 se séparent, un arc électrique est créé. Son énergie fait monter en pression le volume B qui est isolé du volume A par le clapet 29 et les joints glissants 26. La surpression de gaz « neuf » dans le volume A créée par le déplacement du contact mobile 24 à l'intérieur du tube isolant 21 va s'écouler via le clapet 29. Ce clapet 29 est tel qu'en cas de coupure la densité de gaz à l'extrémité des doigts de la tulipe formée par le contact mobile 24 et l'extrémité du contact fixe 23 soit maximum lors du passage du zéro de courant. L'écoulement turbulent de gaz entre les deux contacts créé 23 et 24 par cette surpression est amplifié par la dépression créée lors de la manoeuvre d'ouverture dans le volume B par l'apport de gaz « neuf » et « froid » grâce aux clapets 31.

Le tube isolant 22, en plus de sa fonction de guidage et d'étanchéité, sert de support au conducteur haute tension 21, ce qui permet un gain important de coût, du fait de la suppression de cônes isolants, de contacts, d'éléments de liaisons de type bride, de boulons, d'écrous, etc.... ).

Un dispositif de canalisation des flux gazeux type buse peut être rajouté, ou être partie intégrante du tube isolant 22, en périphérie du contact fixe 23, de manière à optimiser le flux gazeux (comme sur une conception de disjoncteur).

### Référence

[1] « High speed grounding switch for extra-high voltage lines » de G.E. Agafonov, I.V. Balkin, B.E. Berlin, Y. F. Kaminsky, S. V. Tretiakov, Y. I. Vishnevsky, J.H. Yoon, J.H. Kang, B.H. Choi (A3-308, Session 2004, Cigré, pages 1-7).

## Revendications

1. Dispositif sectionneur de terre disposé à l'intérieur d'un poste haute tension à isolation gazeuse comprenant une enveloppe métallique (20) mise à la terre et un conducteur haute tension (21) disposé de façon coaxiale à l'intérieur de celle-ci, qui comprend un tube isolant (22) disposé entre l'enveloppe (20) et le conducteur (21) perpendiculairement à ceux-ci, permettant de supporter le conducteur et de guider une partie mobile conductrice (24) de mise à la terre de ce conducteur (21), dans lequel la partie mobile comprend un contact mobile (24) apte à coulisser à l'intérieur du tube isolant (22), **caractérisé en ce qu'**il comprend, en outre, des clapets d'entrée (28), des clapets (29) de liaison à un volume A (30) interne au tube isolant (22), disposé entre le contact mobile (24) et la seconde extrémité du tube isolant, des clapets (31) de liaison à un volume B (32) interne au tube isolant, disposé entre le contact mobile (24) et la première extrémité du tube isolant (22), et des joints glissants (26) disposés entre la paroi extérieure du contact mobile (24) et la paroi intérieure du tube isolant (22).

2. Dispositif selon la revendication 1, qui comprend un dispositif de canalisation des flux gazeux.

3. Dispositif selon la revendication 1, dans lequel le contact mobile (24) est relié à une tige de manoeuvre (25).

4. Dispositif selon la revendication 1, dans lequel le contact mobile (24)a une forme de tulipe à plusieurs doigts ou une tige métallique conductrice.

5. Dispositif selon la revendication 1, qui comprend un contact fixe (24) solidaire du conducteur haute tension (21) apte à recevoir le contact mobile (24).

6. Poste électrique haute tension comprenant au moins un dispositif sectionneur de terre tel que défini dans l'une quelconque des revendications précédentes.

## Patentansprüche

1. Erdungstrennvorrichtung, die im Inneren einer Hochspannungsstation mit Gasisolierung angeordnet ist, umfassend eine geerdete Metallhülle (20) und einen Hochspannungsleiter (21), der koaxial im Inneren derselben angeordnet ist, umfassend ein Isolierrohr (22), welches zwischen der Hülle (20) und dem Leiter (21) orthogonal zu diesen angeordnet ist und es erlaubt, den Leiter zu stützen und ein bewegliches Leiterteil (24) zur Erdung dieses Leiters (21) zu führen, wobei das bewegliche Teil einen beweglichen Kontakt (24) umfasst, der dazu ausgelegt ist, im Inneren des Isolierrohrs (22) zu gleiten, **dadurch gekennzeichnet, dass** sie ferner Einlassklappen (28) umfasst, ferner Klappen (29) zur Verbindung mit einem Volumen A (30) im Inneren des Isolierrohrs (22), das zwischen dem beweglichen Kontakt (24) und dem zweiten Ende des Isolierrohrs angeordnet ist, ferner Klappen (31) zur Verbindung mit einem Volumen B (32) im Inneren des Isolierrohrs, das zwischen dem beweglichen Kontakt (24) und dem ersten Ende des Isolierrohrs (22) angeordnet ist, sowie Gleitdichtungen (26), die zwischen der Außenwand des beweglichen Kontakts (24) und der Innenwand des Isolierrohrs (22) angeordnet sind.

2. Vorrichtung nach Anspruch 1, die eine Vorrichtung zur Kanalisierung von gasförmigen Strömen umfasst.

3. Vorrichtung nach Anspruch 1, bei der der bewegliche Kontakt (24) mit einer Betätigungsstange (25) verbunden ist.

4. Vorrichtung nach Anspruch 1, bei der der bewegliche Kontakt (24) die Form einer Tulpe mit mehreren Fingern oder einer leitenden Metallstange hat.

5. Vorrichtung nach Anspruch 1, die einen festen Kontakt (24) umfasst, welcher mit dem Hochspannungsleiter (21) verbunden ist, der dazu ausgelegt ist, den beweglichen Kontakt (24) aufzunehmen.

6. Elektrische Hochspannungsstation, umfassend wenigstens eine Erdungstrennvorrichtung, wie in einem der vorhergehenden Ansprüche definiert.

## Claims

1. A grounding switch located inside a gas insulated high-voltage substation having a metal enclosure (20) connected to ground, and a high-voltage conductor (21) located coaxially inside the enclosure, the switch comprising an insulating tube (22) disposed between the enclosure (20) and the conductor (21), perpendicularly thereto, serving to support the conductor and guide a conductive movable portion (24) for grounding said conductor (21), wherein the movable portion comprises a movable contact (24) suitable for sliding inside the insulating tube (22), the switch being **characterized in that** it further comprises inlet valves (28), valves (29) connecting to a volume A inside the insulating tube (22), located between the movable contact (24) and the second end of the insulating tube, valves (31) connecting to a volume B inside the insulating tube, disposed between the movable contact (24) and the first end of the insulating tube (22), and sliding seals (26) located between the outside wall of the movable contact (24) and the inside wall of the insulating tube (22).

2. A switch according to claim 1, including a device for channeling gas flows.

3. A switch according to claim 1, wherein the movable contact (24) is connected to an operating rod (25).

4. A switch according to claim 1, wherein the movable contact (24) is in the form of a tulip having multiple fingers or in the form of a conductive metal rod.

5. A switch according to claim 1, having a stationary contact (24) secured to the high-voltage conductor (21) that is suitable for receiving the movable contact (24).

6. A high-voltage substation including at least one grounding switch as defined in any preceding claim.
